# EUROPÄISCHE PATENTSCHRIFT

(11) **EP 0 928 565 B1**
(45) Veröffentlichungstag und Bekanntmachung des Hinweises auf die Patenterteilung: **10.09.2003**
(21) Anmeldenummer: 98123324.0
(22) Anmeldetag: 08.12.1998
(51) Int. Cl.: A23L 2/38, A23L 1/302, A23L 1/304, A23L 1/305, C02F 1/20

(54) **Trinkflüssigkeit**
Drinking liquid
Liquide potable

(30) Priorität: 17.12.1997 AT 213097
(43) Veröffentlichungstag der Anmeldung: 14.07.1999
(73) Patentinhaber: Meta Handelsgesellschaft m.b.H., 5020 Salzburg (AT)
(72) Erfinder: Dietrichsteiner, Manfred, 5020 Salzburg (AT)
(74) Vertreter: Secklehner, Günter, Dr.

(56) Entgegenhaltungen:
- WO-A-95/28854
- WO-A-98/48648
- DE-A- 3 201 405

## Beschreibung

Die Erfindung betrifft eine Trinkflüssigkeit, wie sie im Oberbegriff des Anspruches 1 beschrieben ist sowie ein Verfahren zur Herstellung dieser Trinkflüssigkeit, wie es im Oberbegriff des Anspruches 21 beschrieben ist.

Aus der DE 32 01 405 C2 ist bereits bekannt, eine natrium- und kaliumfreie, mineralisierte Trinkwasserformulierung zu schaffen, die aus einer wässerigen Lösung von destilliertem Wasser besteht, in der vier durch Strontium, Magnesium, Kalzium und Lithium gebildete Mineralstoffe in dem Wasser gelöst sind. Durch diese Zusammensetzung der Trinkwasserformulierung soll das Entstehen von Herzkranzgefäßleiden herabgesetzt werden. Nachteilig ist hierbei, daß die Trinkwasserlösung nur für einen einzigen, speziellen Anwendungsfall geeignet ist und die Wirkstoffaufnahme aufgrund des anorganischen Charakters der Salze in den Körper nur geringfügig ist.

Trinkwasser, das heute in unserer Umwelt vorkommt, ist durch Nitrate, Pestizide, Halogenverbindungen etc. verunreinigt und diese Verunreinigungen können auch in Wasserwerken nicht oder nicht im ausreichenden Maß korrigiert werden. Viele in Flaschen angebotene Wasser sind ebenfalls stark verunreinigt, da auch diese aus Quellen gewonnen werden.

Der vorliegenden Erfindung liegt die Aufgabe zugrunde, eine Trinkflüssigkeit zu schaffen, bei dem die Wirkstoff- bzw. Mineralstoffversorgung des Körpers eines Menschen über die täglich aufzunehmende Flüssigkeitsmenge einfach möglich ist, um so eine wünschenswerte Körperverfassung zu erreichen und aufrecht zu erhalten.

Diese Aufgabe wird durch die im Anspruch 1 angegebenen Merkmale gelöst. Vorteilhaft ist hierbei, daß Mineralstoffe in Form organischer Salze zudosiert werden, sodaß die Bioverfügbarkeit im Vergleich zu herkömmlichen Mineralwässern, in denen Mineralstoffe in anorganischer Form vorliegen, gesteigert werden kann. Von Vorteil ist auch, daß die Wirkstoff- bzw. Mineralstoffversorgung in flüssiger Form erfolgt, weshalb auf belastendes Hüllenmaterial, wie es in den handelsüblichen Kapseln eingesetzt wird, verzichtet werden kann. Außerdem entfällt das umständliche Hantieren mit in Tablettenform gepreßten Wirkstoffkombinationen, die sich unter Umständen nur sehr langsam im Wasser lösen.

Von Vorteil ist weiters, daß eine Überdosierung an Wirkstoffen nicht bzw. nur sehr schwer möglich ist, da dies die Aufnahme einer erheblichen Menge der Trinkflüssigkeit erfordern würde.

Vorteilhaft ist auch eine Weiterbildung gemäß Anspruch 2, da hierdurch der Energie- und Proteinstoffwechsel, der Stickstoffwechsel bzw. das Sehvermögen positiv beeinflußt werden.

Bei der Ausgestaltung nach Anspruch 3 ist von Vorteil, daß die Knochen- und Zahnbildung, die Funktion des Herz-Kreislaufsystems sowie die Reifung der roten Blutkörperchen unterstützt wird.

Durch die Ausbildung nach Anspruch 4 und/oder 5 können biochemische Prozesse, beispielsweise Methylierungen, die negativen Auswirkungen von aus Fettsäuren gebildeten Peroxyden, der Stoffwechsel der Zellen sowie die Blutviskosität beeinflußt werden.

Die Ausbildungen nach Anspruch 6 und/oder 7 haben eine vorteilhafte Wirkung auf die DNS-Synthese, den Kalzium- bzw. Phosphorhaushalt, den Aminosäure- bzw. Fettsäurestoffwechsel, die Arbeitsleistung der Herzmuskelzellen und den Schutz der Arterienwand.

Vorteilhaft ist auch eine Weiterbildung nach Anspruch 8, da hierdurch Spannungen der Gefäßwände vermindert sowie die Gewinnung und Bereitstellung von Energie verbessert werden können.

Durch die Ausbildungen gemäß Anspruch 9 und/oder 10 ist es möglich, für Körperreaktionen notwendige Mineralstoffe in ausreichendem Maße zur Verfügung zu stellen.

Vorteilhaft ist weiters eine Ausbildung nach Anspruch 11, da hierdurch katalytische Stoffwechselfunktionen unterstützt werden.

Vorteilhaft ist auch eine Ausbildung nach Anspruch 12 und/oder 13, da hierdurch die Blutgerinnung, die Hämoglobinbildung sowie Energiekontrollmechanismen positiv beeinflußt werden.

Bei den Weiterbildungen gemäß den Ansprüchen 14 bis 17 ist von Vorteil, daß wichtige essentielle Aminosäuren dem Körper durch die täglich notwendige Flüssigkeitsaufnahme zugeführt werden können. Damit ist auf einfache Art und Weise eine Grundversorgung mit zum Aufbau für beispielsweise Hormone notwendigen Bausteinen möglich. Als Vertreter seien dabei die in den Langerhanschen Inseln produzierten Hormone Insulin und dessen Antagonist Glucagon genannt. Zudem ist Methionin als Hauptschwefelquelle für den menschlichen Körper anzusehen und spielt eine wichtige Rolle bei der Übertragung von Methylgruppen in der Proteinbiosynthese sowie bei Entgiftungsvorgängen. Glutaminsäure andererseits ist Bestandteil des Muskeleiweißes und ist von zentraler Bedeutung im gesamten Aminosäurestoffwechsel, indem es als Aminogruppendonator dient. Glycin wiederum spielt eine wichtige Rolle bei der Hämbiosynthese über die δ-Aminolävulinsäure und wirkt in inhibitorischen Neurotransmittern. Tyrosin spielt eine wichtige Rolle im Melaminhaushalt und ist nötig zur Produktion von Adrenalin und Thyroidhormonen. Es wird an den Melanosomen der Melanozyten zu zwei Formen des Melamins umgewandelt. Ist dieser Stoffwechsel gestört, führt dies zu einer Lichtüberempfindlichkeit der Haut bzw. der Augen. Leucin wird im Organismus vorwiegend zur Produktion von Serumalbuminen und Serumglobulinen benötigt, Isoleucin zur Produktion von Hämoglobin und Serumproteinen. Phenylalanin ist die Vorstufe des Tyrosins, Tyrosin ist nötig zur Hydrolyse von Peptidbindungen. Tryptophan dient zur Produktion von Serotonin und Melatonin, Valin ist allgemein zur Proteinbildung unersetzlich. Asparagin wird in der Proteinbiosynthese benötigt, Alanin bei enzymatischen Stoffwechselvorgängen von Zuckern und Säuren. Histidin wird gebraucht bei der Hämoglobinsynthese sowie in vielen Enzymproteinen.

Vorteilhaft sind aber auch die Ausgestaltungen nach den Ansprüchen 18 bis 20, wonach der menschliche bzw. unter Umständen tierische Körper mit wichtigen Mineralstoffen versorgt werden kann. So beeinflußt die Zuführung von Fluorid die Knochen- und Zahnbildung positiv bzw. dient der Kariesprophylaxe. Lithium kann als prophylaktisches Mittel bei manisch depressiven Zuständen angesehen werden. Arsen, Lithium und Vanadium sind essentielle Spurenelemente. Arsen ist wichtig im gesamten Eiweißstoffwechsel, besonders in der Schilddrüse, Lithium fördert unter anderem die Harnsäureausscheidung. Vanadium wird im Stoffwechsel benötigt, unter anderem in ATP-asen, Phosphatasen und anderen Enzymen des Energiestoffwechsels. Bor und Aluminium sind Elemente, die in geringsten Mengen im Organismus vorkommen und daher bei Mangel substituiert werden sollen.

Die Aufgabe der Erfindung wird aber auch durch die Merkmale des Anspruches 21 gelöst. Dabei wird in vorteilhafter Weise eine optimale Qualität des Wassers sichergestellt, indem das Wasser in einem oder mehreren Schritten von allen Stoffen befreit wird und in einem Arbeitsgang die notwendigen verfügbaren Substanzen beigefügt werden. Die Einsatzmöglichkeiten einer derartigen Trinkflüssigkeit sind sehr umfangreich, vor allem ist auch an die Anwendung für den täglichen Gebrauch gedacht. Die Trinkflüssigkeit ist aber auch für Spezialanwendungen, z.B. verschiedene therapeutische und/oder medizinische Indikationen, bei denen das gereinigte Wasser als Trägermedium für die dafür notwendigen Substanzen fungiert, besonders geeignet.

Von Vorteil ist auch eine Ausbildung nach Anspruch 22, wonach eine Niederschlagsbildung in der Trinkflüssigkeit und damit möglicherweise verbundene Förderprobleme bei der Herstellung der Trinkflüssigkeit vermieden werden können.

Die vorteilhafte Ausgestaltung nach Anspruch 23 ermöglicht einerseits die Vermeidung einer Übersäuerung der Trinkflüssigkeit und andererseits eine einfache Homogenisierung der zudosierten Wirkstoffe.

Schließlich ist bei den Ansprüchen 24 und 25 von Vorteil, daß damit eine Trinkflüssigkeit hergestellt werden kann, die je nach den Geschmacksbedürfnissen der Verwender dieser Trinkflüssigkeit ein mehr oder weniger großes prickelndes Gefühl beim Trinken vermittelt.

Die Erfindung wird anhand der nachfolgenden Beschreibung näher erläutert.

Einführend sei festgehalten, daß aufgrund der Vielzahl möglicher Wirk- und Mineralstoffe nur einzelne Beispielskombinationen beschrieben werden können. Es können aber auch einzelne Merkmale der in den einzelnen Ausführungsbeispielen gezeigten Merkmalskombinationen jeweils für sich eigenständige, erfindungsgemäße Lösungen bilden.

Aufgrund der Vielzahl möglicher Wirk- und Mineralstoffe sowie der Vielzahl der daraus gebildeten Wirkstoffkombinationen für eine erfindungsgemäße Trinkflüssigkeit sind nachstehend in Tabelle 1 sämtliche mögliche beifügbare Inhaltsstoffe wie Vitamine, Proteine, Aminosäuren, Mineralstoffe und Spurenelemente angeführt.

**Tabelle 1:**

| **Beifügbare Inhaltsstoffe** | | | |
|---|---|---|---|
| **Vitamine:** | | | |
| Vitamin A | 120 µg/l bis 190 mg/l | bevorzugt | 125 µg/l bis 188 mg/l |
| Vitamin D | 1,3 µg/l bis 5 mg/l | bevorzugt | 1,5 µg/l bis 2,5 mg/l |
| Vitamin E | 0,8 µg/l bis 27 µg/l | bevorzugt | 0,87 µg/l bis 25 µg/l |
| Vitamin K | 30 µg/l bis 70 µg/l | bevorzugt | 50 µg/l |
| Vitamin B₁ | 0,6 mg/l bis 1,7 g/l | bevorzugt | 0,7 mg/l bis 1,5 g/l |
| Vitamin B₂ | 0,5 mg/l bis 120 mg/l | bevorzugt | 0,8 mg/l bis 100 mg/l |
| Vitamin B₃ | 7 mg/l bis 120 mg/l | bevorzugt | 9 mg/l bis 100 mg/l |
| Vitamin B₅ | 2,5 mg/l bis 0,7 g/l | bevorzugt | 3 mg/l bis 0,5 g/l |
| Vitamin B₆ | 0,8 mg/l bis 270 mg/l | bevorzugt | 1 mg/l bis 250 mg/l |
| Vitamin B₁₂ | 13 µg/l bis 8 mg/l | bevorzugt | 15 µg/l bis 5 mg/l |
| Vitamin C | 20 µg/l bis 5 g/l | bevorzugt | 30 µg/l bis 5 g/l |
| Flavonoide | 20 mg/l bis 40 mg/l | bevorzugt | 25 mg/l |
| Folsäure | 40 µg/l bis 220 µg/l | bevorzugt | 50 µg/l bis 200 µg/l |
| Beta-Karotin | 30 µg/l bis 0,9 mg/l | bevorzugt | 31 µg/l bis 0,75 mg/l |
| | | | |

| **Proteine und Aminosäuren:** | | | |
|---|---|---|---|
| Coenzym Q-10 | 3 mg/l bis 58 mg/l | bevorzugt | 5 mg/l bis 30 mg/l |
| Inositol | 10 mg/l bis 80 mg/l | bevorzugt | 15 mg/l bis 75 mg/l |
| Isoleucin | 1 mg/l bis 1000 mg/l | bevorzugt | 10 mg/l bis 300 mg/l |
| Leucin | 1 mg/l bis 1500 mg/l | bevorzugt | 11 mg/l bis 300 mg/l |
| Lysin | 70 mg/l bis 260 mg/l | bevorzugt | 80 mg/l bis 250 mg/l |
| Methionin | 1 mg/l bis 1500 mg/l | bevorzugt | 14 mg/l bis 300 mg/l |
| Phenylalanin | 1 mg/l bis 1500 mg/l | bevorzugt | 13 mg/l bis 300 mg/l |
| Threonin | 1 mg/l bis 1000 mg/l | bevorzugt | 10 mg/l bis 200 mg/l |
| Trypthophan | 1 mg/l bis 1000 mg/l | bevorzugt | 10 mg/l bis 200 mg/l |
| Cholin | 30 µg/l bis 1,8 g/l | bevorzugt | 35 µg/l bis 1,5 g/l |
| Biotin | 40 µg/l bis 0,18 mg/l | bevorzugt | 50 µg/l bis 0,15 mg/l |
| Valin | 1 mg/l bis 1500 mg/l | bevorzugt | 11 mg/l bis 300 mg/l |
| Pycnogenol | 4 mg/l bis 18 mg/l | bevorzugt | 5 mg/l bis 15 mg/l |
| Carnitin | 20 mg/l bis 280 mg/l | bevorzugt | 25 mg/l bis 175 mg/l |
| Cystein | 20 mg/l bis 1,6 g/l | bevorzugt | 25 mg/l bis 1,5 g/l |
| Asparagin | 1 µg/l bis 10 g/l | bevorzugt | 100 mg/l bis 1600 mg/l |
| Serin | 1 µg/l bis 10 g/l | bevorzugt | 100 mg/l bis 1600 mg/l |
| Glutaminsäure | 1 µg/l bis 10 g/l | bevorzugt | 100 mg/l bis 1600 mg/l |
| Prolin | 70 mg/l bis 260 mg/l | bevorzugt | 80 mg/l bis 250 mg/l |
| Glycin | 1 µg/l bis 10 g/l | bevorzugt | 100 mg/l bis 1600 mg/l |
| Alanin | 1 µg/l bis 10 g/l | bevorzugt | 100 mg/l bis 1600 mg/l |
| Tyrosin | 1 µg/l bis 10 g/l | bevorzugt | 100 mg/l bis 1600 mg/l |
| Histidin | 1 µg/l bis 10 g/l | bevorzugt | 100 mg/l bis 1600 mg/l |
| Arginin | 25 mg/l bis 85 mg/l | bevorzugt | 27 mg/l bis 82 mg/l |
| | | | |

| **Mineralstoffe und Spurenelemente:** | | | |
|---|---|---|---|
| Natrium | 10 mg/l bis 70 mg/l | bevorzugt | 15 mg/l bis 45 mg/l |
| Kalium | 10 mg/l bis 70 mg/l | bevorzugt | 15 mg/l bis 45 mg/l |
| Magnesium | 3,5 mg/l bis 250 mg/l | bevorzugt | 3,8 mg/l bis 150 mg/l |
| Kalzium | 5 mg/l bis 650 mg/l | bevorzugt | 25 mg/l bis 400 mg/l |
| Eisen | 0,5 mg/l bis 14 mg/l | bevorzugt | 0,65 mg/l bis 7 mg/l |
| Zink | 5 mg/l bis 25 mg/l | bevorzugt | 5 mg/l bis 15 mg/l |
| Mangan | 0,6 mg/l bis 3,4 mg/l | bevorzugt | 0,75 mg/l bis 3 mg/l |
| Kupfer | 200 mg/l bis 1200 mg/l | bevorzugt | 250 mg/l bis 1000 mg/l |
| Phosphor | 2 mg/l bis 550 mg/l | bevorzugt | 3 mg/l bis 400 mg/l |
| Selen | 13 µg/l bis 250 µg/l | bevorzugt | 15 µg/l bis 125 µg/l |
| Chlorid | 1 mg/l bis 100 mg/l | bevorzugt | 1 mg/l bis 20 mg/l |
| Bor | 0,01 µg/l bis 300 µg/l | | |
| Fluorid | 0,5 µg/l bis 1,5 µg/l | bevorzugt | 0,5 µg/l bis 1 µg/l |
| Aluminium | 0,01 µg/l bis 50 µg/l | | |
| Lithium | 0,01 µg/l bis 200 mg/l | bevorzugt | 1 µg/l bis 100 mg/l |
| Jodid | 20 µg/l bis 150 µg/l | bevorzugt | 25 µg/l bis 75 µg/l |
| Arsen | 0,01 µg/l bis 10 µg/l | bevorzugt | 0,01 µg/l bis 2 µg/l |
| Vanadium | 1 µg/l bis 5 mg/l | | |
| Molybdän | 2,5 µg/l bis 70 mg/l | bevorzugt | 3 µg/l bis 5 mg/l |
| Chrom | 6 µg/l bis 0,12 mg/l | bevorzugt | 7,5 µg/l bis 0,1 mg/l |

Mineralstoffe und Spurenelemente werden dabei in Form organischer Salze eingesetzt. So ist es beispielsweise möglich, Salze von Kohlenhydraten wie Gluconate oder aber Salze der Milchsäure wie z.B. Kalziumlactat bzw. Salze der Essigsäure, beispielsweise Alkali- oder Erdalkaliacetate für die Zusammensetzung der Trinkwasserformulierung zu verwenden. Phosphor kann in Form organischer Phosphate eingesetzt werden.

Der Bedarf des menschlichen Körpers an Eiweiß liegt bei 0,34 g/kg Körpergewicht und Tag. Dieser Grundbedarf kann mit Vorteil durch das Trinken einer erfindungsgemäßen Trinkflüssigkeit, welche mit Proteinen versetzt ist, gedeckt werden.

Der tägliche Schwefelbedarf, vor allem in Form von Sulfiden, liegt bei 0,7 mg/kg Körpergewicht und kann beispielsweise durch die Einnahme von Aminosäuren wie Methionin abgedeckt werden.

Selbstverständlich ist es möglich, mit der erfindungsgemäßen Trinkflüssigkeit auch das körperliche Befinden von Tieren, beispielsweise Haustieren zu verbessern. Eine entsprechende Adaption der einzusetzenden Mengen an Wirkstoffen kann auf die einzelnen Tierarten erfolgen.

Die Herstellung einer erfindungsgemäßen Trinkflüssigkeit kann im allgemeinen so durchgeführt werden, daß aus trinkbarem Wasser alle anorganischen und organischen Mineralstoffe und bevorzugt darin gelöste Gase entfernt werden. Diesem reinen Wasser werden in der Folge die benötigten Wirkstoffe wie Vitamine, Proteine, Aminosäuren, Mineralstoffe und Spurenelemente zugesetzt und das so erhaltene Produkt einer abschließenden Entkeimung, beispielsweise durch UV-Licht-Bestrahlung, unterzogen.

Vorzugsweise sollte die Konzentration der dem Wasser zugesetzten Stoffe maximal die Sättigungskonzentration der einzelnen Komponenten in Abhängigkeit der Stoffkombinationen erreichen.

Zur Entfernung von gelöstem CO₂ bzw. zur Homogenisierung der so dosierten Wirkstoffe kann bevorzugt ein gasförmiges Medium wie beispielsweise Stickstoff oder Preßluft durch die erfindungsgemäße Trinkflüssigkeit geblasen werden.

Zur weiteren Belebung der erfindungsgemäßen Trinkflüssigkeit besteht aber auch die Möglichkeit, die Produkteigenschaften durch physikalische Methoden zu verändern, beispielsweise durch Energetisierung, Molekularstrukturveränderungen, oder dgl..

Selbstverständlich besteht auch für Trinkflüssigkeiten gemäß der Erfindung die Möglichkeit, vorzugsweise nach dem Auflösen sämtlicher zugesetzter Wirkstoffe bewußt CO₂ zuzusetzen, vorzugsweise in einer Konzentration, welche über der maximalen Sättigungskonzentration liegt, sodaß dem Endverbraucher der Trinkflüssigkeit ein besonderes, prickelndes und erfrischendes Geschmackserlebnis übermittelt werden kann.

### Beispiel 1

| **Trinkflüssigkeit für optimale Herz-Kreislaufversorgung** | |
|---|---|
| **Inhaltsstoffe:** | |
| **Vitamine:** | |
| Vitamin C | 450 mg/l bis 1500 mg/l, |
| Vitamin E | 2,5 µg/l bis 7,5 µg/l, |
| Beta-Karotin | 31,25 µg/l bis 100 µg/l, |
| Vitamin B₁ | 5 mg/l bis 20 mg/l, |
| Vitamin B₂ | 5 mg/l bis 20 mg/l, |
| Vitamin B₃ | 32,5 mg/l bis 100 mg/l, |
| Vitamin B₅ | 30 mg/l bis 100 mg/l, |
| Vitamin B₆ | 7,5 mg/l bis 25 mg/l, |
| Vitamin B₁₂ | 15 µg/l bis 50 µg/l, |
| Vitamin D | 2,5 µg/l bis 7,5 µg/l, |
| Folsäure | 65 µg/l bis 200 µg/l, |
| Biotin | 0,05 mg/l bis 0,15 mg/l. |
| | |

| **Mineralien:** | |
|---|---|
| Kalzium | 25 mg/l bis 75 mg/l, |
| Magnesium | 30 mg/l bis 100 mg/l, |
| Kalium | 15 mg/l bis 45 mg/l, |
| Phosphor | 10 mg/l bis 30 mg/l. |
| | |

| **Spurenelemente:** | |
|---|---|
| Zink | 5 mg/l bis 15 mg/l, |
| Mangan | 1 mg/l bis 3 mg/l, |
| Kupfer | 250 mg/l bis 1000 mg/l, |
| Selen | 15 µg/l bis 50 µg/l, |
| Chrom | 7,5 µg/l bis 25 µg/l, |
| Molybdän | 3 µg/l bis 10 µg/l. |

| **Aminosäuren und andere wichtige Zellfaktoren:** | |
|---|---|
| Lysin | 80 mg/l bis 250 mg/l, |
| Prolin | 80 mg/l bis 250 mg/l, |
| Carnitin | 25 mg/l bis 75 mg/l, |
| Arginin | 27,5 mg/l bis 82,5 mg/l, |
| Cystein | 25 mg/l bis 75 mg/l, |
| Coenzym Q-10 | 5 mg/l bis 15 mg/l, |
| Pycnogenol | 5 mg/l bis 15 mg/l. |

Zur Herstellung dieser Trinkflüssigkeit für Herz-Kreislaufversorgung kann man von Trinkwasser ausgehen, das durch geeignete Methoden, z.B. Druckfiltration durch eine semipermeable Membran oder Destillation, gereinigt wird. Nach einer Entkeimung durch z.B. UV-Licht-Bestrahlung erfolgt die Zudosierung der Wirkstoffe, wobei darauf zu achten ist, daß Mineralien und Spurenelemente in Form organischer Salze zugesetzt werden. So können beispielsweise Kalzium in Form von Lactat, Magnesium und Kalium als Gluconat, Mangan und Zink als Acetat eingesetzt werden. Eventuell noch in dem Wasser gelöstes CO₂, welches die Eigenschaft hat, bei der Ultrafiltration durch die Filtermembran zu diffundieren, kann durch Einblasen von beispielsweise Stickstoff oder Preßluft aus dem Wasser entfernt werden und gleichzeitig werden dadurch die zudosierten Salze homogen verteilt. Weitere positive Eigenschaften können dem Produkt verliehen werden, wenn dieses beispielsweise mit Hilfe von nach physikalischen Methoden arbeitenden Apparaturen energetisiert bzw. andersartige Molekularstrukturveränderungen vorgenommen werden. Für höchste Ansprüche ist es abschließend möglich, das Produkt einer zweiten Entkeimung durch beispielsweise UV-Licht-Bestrahlung zu unterziehen.

Die Summe der Einzeleigenschaften der zugesetzten Vitamine, Mineralien, Spurenelemente, Aminosäuren und anderen wichtigen Zellfaktoren wirkt sich positiv auf den menschlichen Organismus aus. So ist z.B. Vitamin C unerläßlich für die Stabilität der Blutgefäße, des Herzmuskelgewebes und anderer Körperorgane und ist außerdem wichtiges Wundheilmittel in unserem Körper und verantwortlich für die Reparatur der Blutgefäßwände. Es ist wichtigstes Antioxidans in unserem Körper und bedeutender Biokatalysator für zahlreiche Stoffwechselschritte, wie beispielsweise dem Abbau des Cholesterins. Außerdem ist Vitamin C ein unersetzlicher Bioenergiespender des Zellstoffwechsels für die wichtigsten Energieträgermoleküle in AD-H, in ADP-H und in FAD-H.

Vitamin E (Tokoferol) ist eines der wichtigsten fettlöslichen Antioxidantien im Körper. Es schützt vor allem die Membranen (Außenhaut) von Millionen Körperzellen einschließlich der Zellen des Herzens und der Arterienwände vor Oxidationsschäden. Weiters trägt es zu verminderter Klebrigkeit der Blutplättchen und zu günstigen Fließeigenschaften des Blutes bei.

Beta-Karotin (Provitamin A) ist ebenfalls ein weiteres wichtiges fettlösliches Antioxidans und trägt zu optimaler Blutviskosität und zu vermindertem Gerinnungsrisiko bei.

Vitamin B₁ (Thiamin) ist Cofaktor für Pyrophosphat, einem der wichtigsten Biokatalysatoren des Stoffwechsels und trägt zum optimalen Zellenenergiehaushalt des Herz-Kreislaufsystems und anderer Organe bei.

Vitamin B₂ (Riboflavin) ist ein Strukturmerkmal des FAD-Energietransportmoleküls in allen Zellen.

Vitamin B₃ (Nikotinsäure) ist der Bestandteil der Struktur des Energietransportmoleküls NAD bzw. von verwandten Energieträgern und somit für die Energieversorgung des Körpers mitverantwortlich. Durch das zugesetzte Vitamin C werden diese verbrauchten Energieträger wieder mit Bioenergie aufgeladen. Es ist besonders wichtig, da wegen der hohen Arbeitsleistung der Herzmuskelzellen eine optimale Zufuhr dieser Zellbrennstoffe für das Herz-Kreislaufsystem vonnöten ist.

Vitamin B₅ (Pantothensäure) ist ein Strukturbestandteil des Acetylcoenzym-A-Moleküls, des zentralen Stoffwechselmoleküls jeder Zelle unseres Körpers. Vitamin B₅ ist unerläßlich, um Rückstaus im Zellstoffwechsel zu verhindern, da die Stoffwechselwege von Kohlenhydraten, Eiweißen und Fetten innerhalb der Zellen sich an diesem Molekül kreuzen.

Vitamin B₆ (Pyridoxalphosphat) ist als Strukturbestandteil des Pyridoxalphosphatmoleküls, einem wichtigen Biokatalysator im Stoffwechsel von Aminosäuren und Eiweißen in den Körperzellen, unerläßlich für die Produktion der roten Blutkörperchen, welche wiederum Sauerstoff zu den Zellen des Herz-Kreislaufsystems und anderen Organen transportieren.

Vitamin B₁₂ (Cobalamin) wird ebenfalls für die Produktion der roten Blutkörperchen benötigt. Es ist zudem für den reibungslosen Stoffwechsel von Eiweißen und bestimmten Fettsäuren unerläßlich. Ein schwerer Vitamin B₁₂-Mangel führt zu perniziöser Anämie, einer schweren Form von Blutarmut.

Folsäure ist ebenfalls entscheidend am Transport von Sauerstoff beteiligt.

Die drei letztgenannten Vitamine sind ein gutes Beispiel für die Zusammenarbeit der Vitamine untereinander. Es ist also wichtig zu wissen, welche dieser Naturstoffe der Körper in welchen Mengen benötigt.

Biotin ist ein wichtiger Biokatalysator für den Stoffwechsel von Kohlehydraten, Fetten und Eiweißen.

Ebenso ist Inositol ein Biokatalysator, allerdings für den Zucker-, Fett- und Eiweißstoffwechsel verantwortlich. Inositol ist auch Bestandteil des biologischen Informationsaustausches und hilft bei der Verarbeitung von Bioinformationen in der Zelle, wie z.B. der in Hormonen enthaltenen biologischen Information mit. Die Bedeutung von Inositol für das Herz-Kreislaufsystem ist schnell ersichtlich, da Hormone wie Adrenalin, Insulin unter anderem eine wichtige Rolle bei der Regulation der Herzfunktion spielen.

Wie bereits aus mehreren klinischen Untersuchungen bekannt, spielen die Mineralien ebenso wie die Vitamine eine wichtige Rolle im menschlichen Organismus. Im speziellen sind die Kationen unter anderem lebenswichtige Bestandteile von Biokatalysatoren, die in einer Vielzahl von Stoffwechselschritten unerläßlich sind. Ein Mangel bzw. ein Überangebot an Mineralstoffen führt unter Umständen ebenso wie ein Mangel bzw. ein Überangebot an Vitaminen zu lebensbedrohenden Zuständen. Zu den wichtigsten Mineralien gehören Kalzium, Magnesium und Kalium.

Kalzium hat zahlreiche Funktionen im Herz-Kreislaufsystem. Es trägt unter anderem zur Muskelkontraktibilität bei und ist mitverantwortlich für die myokardiale Übertragung. Kalzium ist also wichtig, um für eine optimale Funktion der für einen regelmäßigen Herzschlag verantwortlichen Nervenimpulse zu sorgen.

Magnesium, der Kalzium-Antagonist der Natur, konnte in klinischen Studien erhöhten Blutdruck senken. Es kann weiters zur Normalisierung eines regelmäßigen Herzschlags beitragen und spielt eine Rolle in der Muskelkontraktion.

Kalium spielt eine besonders wichtige Rolle bei der Muskelaktivität und in der Nervenübertragung. Es ist ebenso wie Kalzium wichtig, um eine optimale Funktion der Nervenimpulse einschließlich des Reizleitungssystems des Herzens zu gewährleisten.

Spurenelemente sind lebenswichtige Biokatalysatoren, die bei einer Vielzahl von Zellstoffwechselschritten unerläßlich sind. Sie werden vom menschlichen Körper, wie dies bereits durch den Begriff "Spurenelement" zu Ausdruck kommt, nur in geringsten Mengen benötigt. Ein Fehlen dieser Elemente führt jedoch auch hier wiederum zu Mangelerscheinungen. So kann beispielsweise bei Selenmangel Kardiomyopathie bei Keshan-Krankheit beobachtet werden.

Aminosäuren sind wichtige Bausteine der Proteine, die als Enzyme wichtiger Biokatalysatoren, als Hormone für die Stoffwechselregulation oder beispielsweise als Strukturproteine Bestandteil von Biomembranen bzw. als Transportproteine verantwortlich sind für den Transport lebenswichtiger Stoffe, wie z.B. Sauerstoff durch Hämoglobin. Die meisten Aminosäuren in unserem Körper stammen von Eiweißen, die wir über die Nahrung zu uns nehmen. Aminosäuren, die unser Körper selbst bilden kann, werden als "nicht essentiell" bezeichnet. Aminosäuren, die der Körper nicht selbst herstellen kann und die daher unbedingt mit der Nahrung zugeführt werden müssen, werden als "essentielle" Aminosäuren bezeichnet.

Lysin ist eine essentielle Aminosäure und wichtiger Baustein von Collagen und Stabilitätsmolekülen. Diese Aminosäure ist ein bedeutender Faktor zur Verhinderung von Abscheidungen an der Arterienwand. Außerdem ist sie Ausgangssubstanz für die körpereigene Produktion von Carnitin.

Prolin ist ein wichtiger Baustein von Kollagenmolekülen und trägt wie Lysin zum Schutz der Arterienwand bei. Prolin kann im Unterschied zu Lysin zwar selbst vom Körper gebildet werden, die produzierte Menge an Prolin ist aber häufig zu gering, sodaß es sinnvoll erscheint, den Bedarf über Lebensmittel auszugleichen.

Arginin ist die Ausgangssubstanz von Gefäßwandfaktoren, die zu einer verminderten Spannung der Gefäßwände führen und damit zu einer Normalisierung erhöhten Blutdrucks beitragen. Arginin bewirkt eine Verminderung der Klebrigkeit der Blutplättchen und trägt zur Verbesserung der Fließeigenschaften des Blutes bei.

Cystein ist eine wichtige Ausgangssubstanz für die Produktion von Glutathion, einem bedeutenden körpereigenen Antioxidans. Glutathion ist zusammen mit anderen Antioxidantien verantwortlich für den Schutz des Körpergewebes vor freien Radikalen.

Carnitin kann als nicht essentielle Aminosäure im Körper selbst gebildet werden. Die körpereigene Produktion ist aber analog zu Prolin zu gering. Eine optimale Zufuhr von Carnitin ist unerläßlich, um für einen reibungslosen Fettstoffwechsel, insbesondere der Triglyceride zu sorgen. Außerdem ist es wichtiges Trägermolekül, das Fettsäuren zum Energiegewinn in die biologischen Kraftwerke der Zelle (Mitochondrien) transportiert. Es sorgt weiters für die optimale Funktion der Herzmuskelzellen, die wegen der ständigen Arbeitsleistung einen hohen Carnitinumsatz haben. Wie anhand klinischer Studien gezeigt werden konnte, verbessert Carnitin bei Patienten mit Herzinsuffizienz die Pumpleistung ihres Herzens deutlich. Außerdem ist bekannt, daß Carnitin bei Patienten mit unregelmäßigem Herzschlag (Arrhythmie) zu einer Normalisierung des Herzrhythmus beiträgt. In beiden Fällen bewirkt Carnitin eine Optimierung der Zellenenergie und damit eine verbesserte Leistung von Millionen Herzmuskelzellen.

Coenzym Q-10 ist auch als Ubiquinon bekannt und spielt eine herausragende Rolle als Katalysator der biologischen Atmungskette im Energiezentrum der Zellen. Es ist besonders wichtig für die Bereitstellung von Bioenergie in den Muskelzellen einschließlich des Herzmuskelgewebes, das wegen seiner Arbeitsleistung einen hohen Umsatz an Coenzym Q-10 hat. Auch hier konnte anhand klinischer Studien der Beweis geführt werden, daß Coenzym Q-10 bei Patienten mit Herzschwäche die Pumpfunktion des Herzens verbessern kann.

Pycnogenol umfaßt eine Gruppe von Bioflavonoiden, die als Katalysatoren für verschiedene Stoffwechselfunktionen von Bedeutung sind. Insbesondere verbessert Pycnogenol die stabilisierende Wirkung von Vitamin C auf das Bindegewebe des Körpers einschließlich der Blutgefäßwände und weiterhin wirkt Pycnogenol als Antioxidans.

### Beispiel 2

| **Wasser für die Intelligenzsteigerung** | |
|---|---|
| **Inhaltsstoffe**: | |
| Flavonoide | 25 mg/l, |
| Biotin | 50 µg/l, |
| Cholin | 35 mg/l, |
| Folsäure | 50 µg/l, |
| Inositol | 15 mg/l, |
| Niacin | 25 mg/l, |
| Pantothensäure | 25 mg/l, |
| Vitamin B₆ | 6 mg/l, |
| Vitamin B₁ | 1,85 mg/l, |
| Riboflavin | 2,5 mg/l, |
| Vitamin A | 187,5 mg/l, |
| Vitamin B₁₂ | 5 mg/l, |
| Vitamin C | 50 mg/l, |
| Vitamin D | 1,5 µg/l, |
| Vitamin E | 0,88 µg/l, |
| Vitamin K | 50 µg/l, |
| Kalzium | 50 mg/l, |
| Chrom | 0,1 mg/l, |
| Magnesium | 3,8 mg/l, |
| Mangan | 0,75 mg/l, |
| Molybdän | 0,05 mg/l, |
| Jod | 25 µg/l, |
| Eisen | 0,65 mg/l, |
| Zink | 5 mg/l. |

Die Herstellung dieser Trinkflüssigkeit kann analog zu der unter Beispiel 1 angeführten Methode erfolgen.

Der Vorteil dieser Trinkflüssigkeit ist, daß die non-verbale Intelligenz, d.h. jene Intelligenz, die nicht durch Schulbildung oder ähnliches beeinflußt wird, in einem Zeitraum von bis zu 8 Monaten um 10 % gesteigert werden kann. Dies wurde anhand eines Versuches an englischen Schulkindern, die allerdings eine Kombination erhielten, die nach deutschen bzw. österreichischen Richtlinien rezeptpflichtig und in ihrer Vielfalt ohnehin unzulässig wäre, bewiesen. Aus den Voruntersuchungen war hervorgegangen, daß die Kinder eine Nahrungszusammenstellung (Schulessen) zu sich nehmen, die als allgemein üblich galt. Berücksichtigt man ferner, daß der Zeitraum vergleichsweise gering war und die Organe bei Kindern als in sehr guter Verfassung gelten, dann ist es verständlich, warum auch der Versuchsleiter von dem Ergebnis überrascht war. Aus dem Ergebnis kann also die Schlußfolgerung gezogen werden, daß die Kinder entgegen allen Erwartungen letztendlich mangelernährt gewesen waren. Die Vermutung, daß dies für die gesamte Bevölkerung gilt, scheint gerechtfertigt. Diesem Umstand trägt obige Kombination an Mikro- und Makronährstoffen Rechnung. Mit dieser Trinkflüssigkeit kann also, ohne zusätzliche Maßnahmen treffen zu müssen, wie beispielsweise die tägliche Einnahme von Tabletten oder Kapseln, die Intelligenz und in weiterer Folge davon die Produktivität der Bevölkerung in einfacher Weise gesteigert werden.

### Beispiel 3

| **Wasser gegen die Ursachen des oxidativen Stresses** | |
|---|---|
| **Inhaltsstoffe:** | |
| Selen | 125 mg/l, |
| Vitamin A | 125 µg/l bis 250 µg/l, |
| Vitamin E | 12,5 µg/l bis 25 µg/l, |
| Zink | 25 mg/l, |
| Vitamin B₂ | 50 mg/l bis 100 mg/l, |
| Vitamin C | 1,5 g/l bis 5 g/l, |
| Cystein | 0,5 g/l bis 1,5 g/l, |
| Vitamin B₁ | 150 mg/l bis 1,5 g/l, |
| Vitamin B₅ | 125 mg/l bis 500 mg/l, |
| Vitamin B₆ | 125 mg/l bis 250 mg/l, |
| Cholin | 0,5 g/l bis 1,5 g/l, |
| Beta-Karotin | 125 µg/l bis 750 µg/l. |

Neben unzulänglichem Nahrungsangebot und umweltbedingten Belastungen sind es auch zahlreiche Medikamente, die einen radikalbildenden Oxidationsprozeß verstärken. Es ist bisher nicht gelungen, das Abwehrsystem des Körpers, das unter regulären Gegebenheiten höchst effektiv arbeitet, auch nur halbwegs zu kopieren. Antibiotika gegen Infektionen und Chemotherapeutika gegen Krebs erreichen nie die Potenz des Sauerstoffs. Es sind und bleiben körperfremde Stoffe (Xenobiotika) und somit ein unvollkommener Ersatz natürlicher Abwehrleistungen. Sie differenzieren nicht zwischen Freund und Feind und schädigen damit auch gesunde Strukturen. Der Arzt erkauft also eine Hauptwirkung auf Kosten vieler Nebenwirkungen.

Medikamente können also Krankheitsverläufe verschlimmern. Ziel jeglicher Therapie sollte es sein, die Redoxpotentiale um den Wert 0 einzupendeln. Da lt. Hypokrates Gesundheit das beste Mittel gegen Krankheit ist, besteht Vorsorge auch darin, einen möglicherweise bereits lange andauernden oxidativen Streß zu unterbrechen, damit der Körper seine Selbstregulationsfähigkeiten wieder erlangen kann. Es ist in vielen Fällen möglich, schon durch die Einnahme von Antioxidantien bzw. hochdosierten Nährstoffen chronische Schädigungen, wie z.B. Allergien, zu bessern oder gar vollständig zu beseitigen. Auf jeden Fall sollten herkömmliche medikamentöse Therapien in weitaus größerem Umfang als dies bisher geschieht durch Nährstoffeinnahme flankiert werden.

Bei privater Vorsorge liegt der Akzent demnach nicht auf vollständiger Vermeidung von Krankheiten sondern auf einer besseren Abwehrleistung gegen unvermeidbare Attacken auf die Gesundheit. Dies wird durch die tägliche Einnahme dieses Wassers erreicht.

### Beispiel 4

| **Trinkflüssigkeit für die Deckung des täglichen Bedarfs an Vitaminen. Proteinen, Aminosäuren, Mineralstoffen und Spurenelementen.** | |
|---|---|
| **Zusammensetzung:** | |
| Vitamin A | 400 mg/l, |
| Vitamin D | 2,5 mg/l, |
| Vitamin E | 5 µg/l, |
| Vitamin C | 30 µg/l, |
| Vitamin B₁ | 0,7 mg/l, |
| Vitamin B₂ | 0,8 mg/l, |
| Niacin | 9 mg/l, |
| Vitamin B₆ | 1 mg/l, |
| Biotin | 75 µg/l, |
| Vitamin B₁₂ | 0,5 µg/l, |
| Folacin | 100 µg/l, |
| Pantothensäure | 3 mg/l, |
| Kalzium | 400 mg/l, |
| Phosphor | 400 mg/l, |
| Eisen | 7 mg/l, |
| Magnesium | 150 mg/l, |
| Zink | 7,5 mg/l, |
| Jod | 75 µg/l. |

### Wirkungsweise:

Vitamin A unterstützt den Sehvorgang. Außerdem ist die normale Struktur des epithelialen Gewebes von Vitamin A abhängig. Vitamin A sorgt weiters für die Stabilität der Lysosomen und trägt zur Glykoproteinsynthese bei. Sein Mangel bewirkt Nachtblindheit, perifollikuläre Hyperkeratose, Xerophthalmie, Keratomalazie sowie erhöhte Morbidität und Mortalität in der Kindheit.

Vitamin E ist intrazelluläres Antioxidans und Fänger freier Radikale in biologischen Membranen. Ein Fehlen bzw. Unterangebot im Körper führt zu neurologischen Störungen sowie Zeroidablagerungen im Muskel.

Vitamin B₁ ist Coenzym für die Decarboxilierung von α-Ketosäuren und die Transketolasereaktion. Ein bekanntes Krankheitsbild bei Thiaminmangel ist Beriberi mit peripheren neurologischen, zerebralen und kardiovaskulären Ausfallserscheinungen. Ein primärer Thiaminmangel tritt infolge unzureichender Aufnahme besonders bei ausschließlicher Ernährung mit maschinell geschältem und poliertem Reis auf. Ein sekundärer Thiaminmangel tritt bei erhöhtem Bedarf z.B. Schwangerschaft, Stillperiode, fieberhaften Erkrankungen und bei Schilddrüsenüberfunktionen, bei eingeschränkter Resorption, z.B. langwierigen Diarrhöen, bei eingeschränkter Utilisation, z.B. schweren Leberschäden auf.

Riboflavin (Vitamin B₂) fungiert sowohl als Flavinmononukleotid als auch als Flavinadenindinukleotid als essentielles Coenzym bei vielen Redoxreaktionen im Kohlenhydratstoffwechsel. Es ist am Aufbau und an der Erhaltung muköser Membranen beteiligt. Riboflavinmangel führt zu Schädigungen des Mundbereichs, der Augen, der Haut und der Genitalregion.

Vitamin C ist essentiell für die Bildung von Kollagen und erhält die Substanzen mesenchymatösen Ursprungs (Bindegewebe, Osteoidsubstanz des Knochens, Dentin der Zähne). Es fördert die Wundheilung und die Genesung nach Verbrennungen. Als starkes Reduktionsmittel kann es reversibel Wasserstoff bzw. Elektronen übertragen.

Dabei bildet es mit seiner reduzierten Form, der Dehydroaskorbinsäure, ein zelluläres Redoxsystem. Vitamin C ist am Phenylalanin- und Tyrosinstoffwechsel beteiligt und aktiviert als Reduktionsmittel diejenigen Enzyme, die das Prolin und Lysin des Protokollagens nach der Translation zu Hydroxiprolin und Hydroxilysin hydroxilieren. Vitamin C bewirkt auch, daß Folsäure, die an Bestandteile von Nahrungsmitteln gekoppelt ist, aus diesen Konjugationen herausgelöst wird und fördert darüber hinaus die Eisenresorption.

Vitamin B₆ ist am Stickstoffwechsel, z.B. an der Transaminierung der Porphyrin- und Hämsynthese, der Tryptophanumwandlung zu Niacin und dem Linolsäuremetabolismus beteiligt. Mangelerscheinungen betreffen den Stoffwechsel des Blutes, der Haut und des zentralen Nervensystems.

Vitamin D ist wichtig für die Kalzium- und Phosphorresorption, für die Resorption, Mineralisation und Kollagenreifung des Knochens sowie für tubuläre Rückresorption von Phosphor. Eine bekannte Knochenerkrankung, die durch Vitamin D Mangel verursacht wird, bezeichnet man bei Kindern als Rachitis und bei Erwachsenen als Osteomalazie.

Vitamin B₁₂ trägt zur Reifung der roten Blutkörperchen, neuralen Funktionen, zur DNS-Synthese in Verbindung mit den Folsäurecoenzymen sowie zur Methionin- und Acetatsynthese bei.

Neben der täglichen Zufuhr von entsprechenden Dosen an Vitaminen ist aber auch, wie bereits an anderer Stelle geschrieben wurde, die tägliche Mineralstoffaufnahme von besonderer Bedeutung. Beispielsweise sind Kalzium und Phosphor besonders wichtig für die Knochen- und Zahnbildung. Phosphor trägt darüber hinaus zur Energiespeicherung in Form von Phosphaten, speziell dem Adenosintriphosphat, welches bei Energieverbrauch zu Adenosindiphosphat abgebaut wird, bei. Ein Mangel an Phosphor bewirkt unter anderem Schwäche, Störungen der Blutzellen sowie Irritabilität.

Eisen wiederum trägt entscheidend zur Sauerstoffversorgung des menschlichen Körpers bei. Es liegt komplex gebunden im Hämoglobin, speziell im roten Blutfarbstoff Häm vor und übernimmt den Sauerstofftransport von den Lungen in die Zellen bzw. den Abtransport der Verbrennungsprodukte, speziell von CO₂ aus den Zellen in die Lungen. Ein zu niedriger Eisenspiegel führt zu verminderter Leistungsfähigkeit bzw. Lernfähigkeitsstörungen sowie zur Anämie.

### Beispiel 5

| **Trinkflüssigkeit für die Versorgung schwangerer und stillender Mütter** | |
|---|---|
| **Inhaltsstoffe:** | |
| Vitamin C | 35 mg/l bis 47 mg/l, |
| Vitamin E | 5 µg/l bis 6 µg/l, |
| Vitamin B₁ | 0,6 mg/l bis 0,8 mg/l, |
| Zink | 8 mg/l bis 9,5 mg/l. |

Die ausreichende Versorgung schwangerer bzw. stillender Mütter sowie in der Folge von deren ungeborenen bzw. neugeborenen Kindern ist für die Aufrechterhaltung der Gesundheit von besonderer Bedeutung. Eine Trinkflüssigkeit mit obigen Inhaltsstoffen kann in vorteilhafter Weise dazu beitragen, den erhöhten Bedarf an Vitaminen und Mineralstoffen abzudecken.

Ein primärer Vitamin E Mangel findet sich häufig bei Frühgeborenen, besonders dann, wenn der Anteil an ungesättigten Fettsäuren in der Säuglingsnahrung sehr hoch ist. Proteinkalorisch mangelernährte Kinder haben oft einen niedrigen Vitamin E Serummangel. Ein niedriger Vitamin E Serumspiegel und eine durch Autooxidationsprodukte erhöhte Hämolyse bei Frühgeborenen, die mit pflanzenölhaltiger Nahrung gefüttert werden, finden sich in Verbindung mit Ödemen und schuppiger Dermatitis. Beim Erwachsenen führt der Vitamin E Mangel zu einer verkürzten Lebensdauer der roten Blutkörperchen. Diese Mangelerscheinungen können entscheidend durch die tägliche Zufuhr von Vitamin E vermieden werden.

Auf die Wirkungsweise von Vitamin C und Vitamin B₁ sowie die Auswirkungen eines Mangels an diesen Vitaminen ist bereits in den vorstehenden Beispielen eingegangen worden.

Eine ausreichende Versorgung mit Zink ist besonders wichtig, da der Zinkgehalt des Körpers zwischen 1 g und 2,5 g beträgt, wobei sich der größte Anteil in Knochen, Zähnen, Haaren, Haut, Leber und Muskeln befindet. Die Komplexierung des mit der Nahrung zugeführten Zinks durch faser- und phytatreiche, ausschließliche Brotkost, die Geophagie und ein Parasitenbefall können zu einer verminderten Resorption und damit zu Mangelerscheinungen führen. Wie aus klinischen Studien bekannt ist, zeigen Kinder, deren Zinkgehalt im Körper zu niedrig ist, Appetitlosigkeit, sind zu klein und weisen eine herabgesetzte Geschmacksempfindung auf. Bei Zinkmangel der Mutter kann bei den Kindern Anenziphalie verursachen.

Abschließend sei nochmals darauf hingewiesen, daß die beschriebenen Trinkflüssigkeiten mit ihren speziellen Wirkstoffkombinationen nur Beispiele der erfindungsgemäßen Aufgabenlösung sind. Einzelne Komponenten der Trinkflüssigkeiten sowie zu obigen Beispielen unterschiedliche Merkmalskombinationen können eigenständige, erfindungsgemäße Lösungen bilden.

## Patentansprüche

1. Trinkflüssigkeit, bestehend aus einem von anorganischen und organischen Mineralstoffen befreiten, und bevorzugt entgasten, Wasser, in dem Mineralstoffe bzw. Spurenelemente und zumindest drei unterschiedliche Vitamine sowie gegebenenfalls Proteine und/oder Aminosäuren gelöst sind, **dadurch gekennzeichnet, daß** die Mineralstoffe bzw. Spurenelemente ausschließlich in Form organischer Salze enthalten sind, wobei zumindest ein Mineralstoff durch Zink in einem Ausmaß zwischen 5 mg/l und 25 mg/l, bevorzugt 5 mg/l bis 15 mg/l gebildet ist und als Vitamine zumindest Vitamin C im Ausmaß von 20 µg/l bis 5 g/l, bevorzugt 30 µg/l bis 5 g/l, Vitamin E in einem Ausmaß von 0,8 µg/l bis 27 µg/l, bevorzugt 0,87 µg/l bis 25 µg/l und Vitamin B₁ in einem Ausmaß von 0,6 mg/l bis 1,7 g/l, bevorzugt 0,7 mg/l bis 1,5 g/l enthalten sind.

2. Trinkflüssigkeit nach Anspruch 1, **dadurch gekennzeichnet, daß** Vitamin A in einem Ausmaß zwischen 120 µg/l bis 190 mg/l, bevorzugt 125 µg/l bis 188 mg/l und/oder Vitamin B₆ in einem Ausmaß zwischen 0,8 mg/l bis 270 mg/l, bevorzugt 1 mg/l bis 250 mg/l und/oder Vitamin B₂ in einem Ausmaß zwischen 0,5 mg/l bis 120 mg/l, bevorzugt 0,8 mg/l bis 100 mg/l enthalten sind.

3. Trinkflüssigkeit nach Anspruch 1 und/oder 2, **dadurch gekennzeichnet, daß** als organische Mineralstoffe Kalzium in einem Ausmaß zwischen 5 mg/l und 650 mg/l, bevorzugt 25 mg/l bis 400 mg/l und Magnesium in einem Ausmaß zwischen 3,5 mg/l bis 250 mg/l, bevorzugt 3,8 mg/l bis 150 mg/l sowie Folsäure in einem Ausmaß zwischen 40 µg/l bis 220 µg/l, bevorzugt 50 µg/l bis 200 µg/l enthalten sind.

4. Trinkflüssigkeit nach einem der vorhergehenden Ansprüche, **dadurch gekennzeichnet, daß** Cholin in einer Konzentration zwischen 30 µg/l und 1,8 g/l, bevorzugt 35 µg/l bis 1,5 g/l enthalten ist.

5. Trinkflüssigkeit nach einem der vorhergehenden Ansprüche, **dadurch gekennzeichnet, daß** als organischer Mineralstoff Selen in einem Ausmaß zwischen 13 µg/l und 250 µg/l, bevorzugt 15 µg/l bis 125 µg/l und/oder Vitamin B₅ in einem Ausmaß zwischen 2,5 mg/l bis 0,7 g/l, bevorzugt 3 mg/l bis 0,5 g/l und/oder Beta-Karotin in einem Ausmaß von 30 µg/l bis 0,90 mg/l, bevorzugt 31 µg/l bis 0,75 mg/l und/oder Cystein in einem Ausmaß von 20 mg/l bis 1,6 g/l, bevorzugt 25 mg/l bis 1,5 g/l enthalten sind.

6. Trinkflüssigkeit nach einem der vorhergehenden Ansprüche, **dadurch gekennzeichnet, daß** die Vitamine B₁₂ in einem Ausmaß von 13 µg/l bis 8 mg/l, bevorzugt 15 µg/l bis 5 mg/l und/oder D in einem Ausmaß von 1,3 µg/l bis 5 mg/l, bevorzugt 1,5 µg/l bis 2,5 mg/l und/oder Biotin in einem Ausmaß von 40 µg/l bis 0,18 mg/l, bevorzugt 50 µg/l bis 0,15 mg/l enthalten sind.

7. Trinkflüssigkeit nach einem der vorhergehenden Ansprüche, **dadurch gekennzeichnet, daß** Vitamin B₃ in einer Konzentration zwischen 7 mg/l und 120 mg/l, bevorzugt 9 mg/l bis 100 mg/l und/oder Lysin und/oder Prolin jeweils in einer Konzentration zwischen 70 mg/l bis 260 mg/l, bevorzugt 80 mg/l bis 250 mg/l vorliegen.

8. Trinkflüssigkeit nach einem der vorhergehenden Ansprüche, **dadurch gekennzeichnet, daß** Carnitin in einer Konzentration zwischen 20 mg/l und 280 mg/l, bevorzugt 25 mg/l bis 175 mg/l und/oder Arginin in einer Konzentration zwischen 25 mg/l und 85 mg/l, bevorzugt 27 mg/l bis 82 mg/l und/oder Coenzym Q10 in einer Konzentration zwischen 3 mg/l und 58 mg/l, bevorzugt 5 mg/l bis 30 mg/l vorliegen.

9. Trinkflüssigkeit nach einem der vorhergehenden Ansprüche, **dadurch gekennzeichnet, daß** als organische Salze Kalium und/oder Natrium in einem Konzentrationsausmaß von jeweils 10 mg/l bis 70 mg/l, bevorzugt 15 mg/l bis 45 mg/l und/oder Phosphor, beispielsweise als Phosphat, in einem Konzentrationsausmaß zwischen 2 mg/l bis 550 mg/l, bevorzugt 3 mg/l bis 400 mg/l enthalten sind.

10. Trinkflüssigkeit nach einem der vorhergehenden Ansprüche, **dadurch gekennzeichnet, daß** als organische Mineralstoffe Mangan in einer Konzentration zwischen 0,6 mg/l und 3,4 mg/l, bevorzugt 0,75 mg/l bis 3 mg/l und/oder Chrom in einer Konzentration zwischen 6 µg/l und 0,12 mg/l, bevorzugt zwischen 7,5 µg/l und 0,1 mg/l und/oder Molybdän in einer Konzentration zwischen 2,5 µg/l und 70 mg/l, bevorzugt 3 µg/l bis 5 mg/l enthalten sind.

11. Trinkflüssigkeit nach einem der vorhergehenden Ansprüche, **dadurch gekennzeichnet, daß** Inositol in einer Konzentration zwischen 10 mg/l und 80 mg/l, bevorzugt 15 mg/l bis 75 mg/l und/oder Pycnogenol in einer Konzentration zwischen 4 mg/l und 18 mg/l, bevorzugt 5 mg/l bis 15 mg/l und/oder als organischer Mineralstoff Kupfer in einer Konzentration zwischen 200 mg/l bis 1200 mg/l, bevorzugt 250 mg/l bis 1000 mg/l enthalten sind.

12. Trinkflüssigkeit nach einem der vorhergehenden Ansprüche, **dadurch gekennzeichnet, daß** Eisen in einem Ausmaß zwischen 0,5 mg/l bis 14 mg/l, bevorzugt 0,65 mg/l bis 7 mg/l und/oder Jodid in einem Ausmaß zwischen 20 µg/l und 150 µg/l, bevorzugt 25 µg/l bis 75 µg/l vorliegen.

13. Trinkflüssigkeit nach einem der vorhergehenden Ansprüche, **dadurch gekennzeichnet, daß** Flavonoide in einem Ausmaß zwischen 20 mg/l und 40 mg/l, bevorzugt 25 mg/l, und/oder Vitamin K in einem Ausmaß zwischen 30 µg/l und 70 µg/l, bevorzugt 50 µg/l enthalten sind.

14. Trinkflüssigkeit nach einem der vorhergehenden Ansprüche, **dadurch gekennzeichnet, daß** Isoleuzin im Ausmaß von 1 mg/l bis 1000 mg/l, bevorzugt 10 mg/l bis 300 mg/l und/oder Leuzin im Ausmaß von 1 mg/l bis 1500 mg/l, bevorzugt 11 mg/l bis 300 mg/l und/oder Methionin im Ausmaß von 1 mg/l bis 1500 mg/l, bevorzugt 14 mg/l bis 300 mg/l enthalten sind.

15. Trinkflüssigkeit nach einem der vorhergehenden Ansprüche, **dadurch gekennzeichnet, daß** Phenylalanin im Ausmaß von 1 mg/l bis 1500 mg/l, bevorzugt 13 mg/l bis 300 mg/l und/oder Threonin im Ausmaß von 1 mg/l bis 1000 mg/l, bevorzugt 10 mg/l bis 200 mg/l und/oder Tryptophan im Ausmaß von 1 mg/l bis 1000 mg/l, bevorzugt 10 mg/l bis 200 mg/l und/oder Valin im Ausmaß von 1 mg/l bis 1500 mg/l, bevorzugt 11 mg/l bis 300 mg/l enthalten ist.

16. Trinkflüssigkeit nach einem der vorhergehenden Ansprüche, **dadurch gekennzeichnet, daß** Asparagin im Ausmaß von 1 µg/l bis 10g/l, bevorzugt 100 mg/l bis 1600 mg/l und/oder Serin im Ausmaß von 1 µg/l bis 10 g/l, bevorzugt 100 mg/l bis 1600 mg/l und/oder Glutaminsäure im Ausmaß von 1 µg/l bis 10 g/l, bevorzugt 100 mg/l bis 1600 mg/l enthalten sind.

17. Trinkflüssigkeit nach einem der vorhergehenden Ansprüche, **dadurch gekennzeichnet, daß** Glycin im Ausmaß von 1 µg/l bis 10 g/l, bevorzugt 100 mg/l bis 1600 mg/l und/oder Alanin im Ausmaß von 1 µg/l bis 10 g/l, bevorzugt 100 mg/l bis 1600 mg/l und/oder Tyrosin im Ausmaß von 1 µg/l bis 10 g/l, bevorzugt 100 mg/l bis 1600 mg/l und/oder Histidin im Ausmaß von 1 µg/l bis 10 g/l, bevorzugt 100 mg/l bis 1600 mg/l enthalten sind.

18. Trinkflüssigkeit nach einem der vorhergehenden Ansprüche, **dadurch gekennzeichnet, daß** als Mineralstoffe Chlorid im Ausmaß von 1 mg/l bis 100 mg/l, bevorzugt 1 mg/l bis 20 mg/l und/oder Fluorid im Ausmaß von 0,5 µg/l bis 1,5 µg/l, bevorzugt 0,5 µg/l bis 1 µg/l enthalten sind.

19. Trinkflüssigkeit nach einem der vorhergehenden Ansprüche, **dadurch gekennzeichnet, daß** als organische Mineralstoffe Bor im Ausmaß von 0,01 µg/l bis 300 µg/l und/oder Aluminium im Ausmaß von 0,01 µg/l bis 50 µg/l enthalten sind.

20. Trinkflüssigkeit nach einem der vorhergehenden Ansprüche, **dadurch gekennzeichnet, daß** als organische Mineralstoffe Arsen im Ausmaß von 0,01 µg/l bis 10 µg/l, bevorzugt 0,01 µg/l bis 2 µg/l und/oder Lithium im Ausmaß von 1 µg/l bis 200 mg/l, bevorzugt 1 µg/l bis 100 mg/l und/oder Vanadium im Ausmaß von 1 µg/l bis 5 mg/l enthalten sind.

21. Verfahren zur Herstellung einer Trinkflüssigkeit nach einem der vorhergehenden Ansprüche, bei dem aus trinkbarem Wasser alle anorganischen und organischen Mineralstoffe und bevorzugt darin gelöste Gase entfernt werden, worauf diesem reinen Wasser Vitamine und Mineralstoffe bzw. Spurenelemente sowie gegebenenfalls Proteine und/oder Aminosäuren zugesetzt werden und das so erhaltene Produkt bevorzugt einer abschließenden Entkeimung durch z.B. UV-Licht-Bestrahlung unterzogen wird, **dadurch gekennzeichnet, daß** die Mineralstoffe und/oder Spurenelemente ausschließlich in Form organischer Salze zugesetzt werden.

22. Verfahren nach Anspruch 21, **dadurch gekennzeichnet, daß** die Konzentration der dem Wasser zugesetzten Stoffe maximal die Sättigungskonzentration der einzelnen Komponenten in Abhängigkeit der Stoffkombinationen erreicht.

23. Verfahren nach Anspruch 21 und/oder 22, **dadurch gekennzeichnet, daß** zur Entfernung von gelöstem CO₂ und zur homogenen Verteilung der zudosierten Stoffe bevorzugt Stickstoff oder Preßluft eingeblasen wird.

24. Verfahren nach einem der Ansprüche 21 bis 23, **dadurch gekennzeichnet, daß** in der Trinkflüssigkeit CO₂ gelöst wird, vorzugsweise in einer Konzentration, die über der maximalen Sättigungskonzentration liegt.

25. Verfahren nach Anspruch 24, **dadurch gekennzeichnet, daß** das CO₂ nach dem Auflösen sämtlicher zugesetzter Vitamine, Aminosäuren, Proteine, Mineralstoffe und Spurenelemente zugegeben wird.

## Claims

1. Drinking liquid, consisting of water from which inorganic and organic minerals have been removed and preferably free from gas, in which minerals and trace elements and at least three different vitamins and optionally proteins and/or amino acids are dissolved, **characterised in that** the minerals and trace elements are incorporated exclusively in the form of organic salts, and at least one mineral is zinc with a content of between 5 mg/l and 25 mg/l, preferably 5 mg/l to 15 mg/l, and in terms of vitamins, it contains at least vitamin C in a quantity of 20 µg/l to 5 g/l, preferably 30 µg/l to 5 g/l, vitamin E in a quantity of 0.8 µg/l to 27 µg/l, preferably 0.87 µg/l to 25 µg/l and vitamin B₁ in a quantity of 0.6 mg/l to 1.7 g/l, preferably 0.7 mg/l to 1.5 g/l.

2. Drinking liquid as claimed in claim 1, **characterised in that** it contains vitamin A in a quantity of between 120 µg/l and 190 mg/l, preferably 125 µg/l to 188 mg/l and/or vitamin B₆ in a quantity of between 0.8 mg/l to 270 mg/l, preferably 1 mg/l to 250 mg/l and/or vitamin B₂ in a quantity of between 0.5 mg/l to 120 mg/l, preferably 0.8 mg/l to 100 mg/l.

3. Drinking liquid as claimed in claim 1 and/or 2, **characterised in that** in terms of organic minerals, it contains potassium in a quantity of between 5 mg/l and 650 mg/l, preferably 25 mg/l and 400 mg/l, and magnesium in a quantity of between 3.5 mg/l and 250 mg/l, preferably 3.8 mg/l and 150 mg/l, as well as folic acid in a quantity of between 40 µg/l and 220 µg/l, preferably 50 µg/l to 200 µg/l.

4. Drinking liquid as claimed in one of the preceding claims, **characterised in that** it contains choline in a concentration of between 30 µg/l and 1.8 g/l, preferably 35 µg/l and 1.5 g/l.

5. Drinking liquid as claimed in one of the preceding claims, **characterised in that** in terms of organic minerals, it contains selenium in a quantity of between 13 µg/l and 250 µg/l, preferably 15 µg/l to 125 µg/l, and/or vitamin B₅ in a quantity of between 2.5 mg/l and 0.7 g/l, preferably 3 mg/l to 0.5 g/l, and/or beta carotene in a quantity of from 30 µg/l to 0.90 mg/l, preferably 31 µg/l to 0.75 mg/l and/or cysteine in a quantity of from 20 mg/l to 1.6 g/l, preferably 25 mg/l to 1.5 g/l.

6. Drinking liquid as claimed in one of the preceding claims, **characterised in that** it contains vitamin B₁₂ in a quantity of from 13 µg/l to 8 mg/l, preferably 15 µg/l to 5 mg/l, and/or D in a quantity of from 1.3 µg/l to 5 mg/l, preferably 1.5 µg/l to 2.5 mg/l, and/or biotin in a quantity of from 40 µg/l to 0.18 mg/l, preferably 50 µg/l to 0.15 mg/l.

7. Drinking liquid as claimed in one of the preceding claims, **characterised in that** it contains vitamin B₃ in a concentration of between 7 mg/l and 120 mg/l, preferably 9 mg/l to 100 mg/l, and/or lysine and/or proline respectively in a concentration of between 70 mg/l and 260 mg/l, preferably 80 mg/l to 250 mg/l.

8. Drinking liquid as claimed in one of the preceding claims, **characterised in that** it contains carnitine in a concentration of between 20 mg/l and 280 mg/l, preferably 25 mg/l to 175 mg/l, and/or arginine in a concentration of between 25 mg/l and 85 mg/l, preferably 27 mg/l and 82 mg/l, and/or coenzyme Q10 in a concentration of between 3 mg/l and 58 mg/l, preferably 5 mg/l to 30 mg/l.

9. Drinking liquid as claimed in one of the preceding claims, **characterised in that**, in terms of organic salts, it contains potassium and/or sodium in a concentration of respectively 10 mg/l to 70 mg/l, preferably 15 mg/l to 45 mg/l, and/or phosphorous, for example in the form of phosphate, in a concentration of between 2 mg/l and 550 mg/l, preferably 3 mg/l to 400 mg/l.

10. Drinking liquid as claimed in one of the preceding claims, **characterised in that**, in terms or organic minerals, it contains manganese in a concentration of between 0.6 mg/l and 3.4 mg/l, preferably 0.75 mg/l to 3 mg/l, and/or chromium in a concentration of between 6 µg/l and 0.12 mg/l, preferably between 7.5 µg/l and 0.1 mg/l, and/or molybdenum in a concentration of between 2.5 µg/l and 70 mg/l, preferably 3 µg/l to 5 mg/l.

11. Drinking liquid as claimed in one of the preceding claims, **characterised in that** it contains inositol in a concentration of between 10 mg/l and 80 mg/l, preferably 15 mg/l to 75 mg/l, and/or pycnogenol in a concentration of between 4 mg/l and 18 mg/l, preferably 5 mg/l to 15 mg/l, and/or, as an organic mineral, copper in a concentration of between 200 mg/l and 1200 mg/l, preferably 250 mg/l and 1000 mg/l.

12. Drinking liquid as claimed in one of the preceding claims, **characterised in that** it contains iron in a quantity of between 0.5 mg/l and 14 mg/l, preferably 0.65 mg/l to 7 mg/l, and/or iodide in a quantity of between 20 µg/l and 150 µg/l, preferably 25 µg/l to 75 µg/l.

13. Drinking liquid as claimed in one of the preceding claims, **characterised in that** it contains flavonoids in a quantity of between 20 mg/l and 40 mg/l, preferably 25 mg/l, and/or vitamin K in quantity of between 30 µg/l and 70 µg/l, preferably 50 µg/l.

14. Drinking liquid as claimed in one of the preceding claims, **characterised in that** it contains isoleucine in a quantity of from 1 mg/l to 1000 mg/l, preferably 10 mg/l to 300 mg/l, and/or leucine in a quantity of from 1 mg/l to 1500 mg/l, preferably 11 mg/l to 300 mg/l, and/or methionine in a quantity of from 1 mg/l to 1500 mg/l, preferably 14 mg/l to 300 mg/l.

15. Drinking liquid as claimed in one of the preceding claims, **characterised in that** it contains phenyl alanine in a quantity of from 1 mg/l to 1500 mg/l, preferably 13 mg/l to 300 mg/l, and/or threonine in a quantity of from 1 mg/l to 1000 mg/l, preferably 10 mg/l to 200 mg/l, and tryptophan in a quantity of from 1 mg/l to 1000 mg/l, preferably 10 mg/l to 200 mg/l, and/or valine in a quantity of from 1 mg/l to 1500 mg/l, preferably 11 mg/l to 300 mg/l.

16. Drinking liquid as claimed in one of the preceding claims, **characterised in that** it contains asparagine in a quantity of from 1 µg/l to 10 g/l, preferably 100 mg/l to 1600 mg/l, and/or serine in a quantity of from 1 µg/l to 10 g/l, preferably 100 mg/l to 1600 mg/l, and/or glutamic acid in a quantity of from 1 µg/l to 10 g/l, preferably 100 mg/l to 1600 mg/l.

17. Drinking liquid as claimed in one of the preceding claims, **characterised in that** it contains glycine in a quantity of from 1 µg/l to 10 g/l, preferably 100 mg/l to 1600 mg/l, and/or alanine in a quantity of from 1 µg/l to 10 g/l, preferably 100 mg/l to 1600 mg/l, and/or tyrosine in a quantity of from 1 µg/l to 10 g/l, preferably 100 mg/l to 1600 mg/l, and/or histidine in a quantity of from 1 µg/l to 10 g/l, preferably 100 mg/l to 1600 mg/l.

18. Drinking liquid as claimed in one of the preceding claims, **characterised in that**, in terms of minerals, it contains chloride in a quantity of from 1 mg/l to 100 mg/l, preferably 1 mg/l to 20 mg/l, and/or fluoride in a quantity of from 0.5 µg/l to 1.5 µg/l, preferably 0.5 µg/l to 1 µg/l.

19. Drinking liquid as claimed in one of the preceding claims, **characterised in that**, in terms of organic minerals, it contains boride in a quantity of from 0.01 µg/l to 300 µg/l and/or aluminium in a quantity of from 0.01 µg/l to 50 µg/l.

20. Drinking liquid as claimed in one of the preceding claims, **characterised in that**, in terms of organic minerals, it contains arsenic in a quantity of from 0.01 µg/l to 10 µg/l, preferably 0.01 µg/l to 2 µg/l, and/or lithium in a quantity of from 1 µg/l to 200 mg/l, preferably 1 µg/l to 100 mg/l, and/or vanadium in a quantity of from 1 µg/l to 5 mg/l.

21. Method of making a drinking liquid as claimed in one of the preceding claims, whereby all inorganic and organic minerals and preferably any dissolved gases are removed from a drinkable water, after which vitamins and minerals or trace elements and optionally proteins and/or amino acids are added to this pure water and the resultant product is then preferably put through a final sterilisation process by irradiating it with UV light, for example, **characterised in that** the minerals and/or trace elements are added exclusively in the form of organic salts.

22. Method as claimed in claim 21, **characterised in that** the concentration of substances added to the water is at most the saturation concentration of the individual components depending on the combinations of substances.

23. Method as claimed in claim 21 and/or 22, **characterised in that** preferably nitrogen or compressed is blasted in, in order to remove dissolved CO₂ and ensure that the added substances are homogeneously distributed.

24. Method as claimed in one of claims 21 to 23, **characterised in that** CO₂ is dissolved in the drinking liquid, preferably in a concentration above the maximum saturation concentration.

25. Method as claimed in claim 24, **characterised in that** the CO₂ is added after all the added vitamins, amino acids proteins, minerals and trace elements have dissolved.

## Revendications

1. Liquide potable, se composant d'une eau libérée des matières minérales inorganiques et organiques et préférentiellement dégazée, dans laquelle des matières minérales ou respectivement des traces et au moins trois vitamines différentes ainsi que, le cas échéant, des protéines et/ou des acides aminés sont dissous, **caractérisée en ce que** les matières minérales ou respectivement les traces sont contenues exclusivement sous la forme de sels organiques et au moins une matière minérale est formée de zinc en une quantité comprise entre 5 mg/l et 25 mg/l, de préférence de 5 mg/l à 15 mg/l et en tant que vitamines sont contenues au moins de la vitamine C en une quantité de 20 µg/l à 5 g/l, préférentiellement de 30 µg/l à 5 g/l, de la vitamine E en une quantité de 0,8 µg/l à 27 µg/l, préférentiellement de 0,87 µg/l à 25 µg/l et de la vitamine B₁ en une quantité de 0,6 mg/l à 1,7 g/l, préférentiellement de 0,7 mg/l à 1,5 g/l.

2. Liquide potable selon la revendication 1, **caractérisé en ce que** la vitamine A est contenue en une quantité comprise entre 120 µg/l et 190 mg/l, préférentiellement 125 µg/l à 188 mg/l et/ou la vitamine B₆ en une quantité comprise entre 0,8 mg/l et 270 mg/l, préférentiellement entre 1 mg/l et 250 mg/l et/ou la vitamine B₂ en une quantité comprise entre 0,5 mg/l et 120 mg/l, préférentiellement de 0,8 mg/l à 100 mg/l.

3. Liquide potable selon la revendication 1 et/ou 2, **caractérisé en ce qu'**en tant que matières minérales organiques sont contenues du calcium en une quantité comprise entre 5 mg/l et 650 mg/l, préférentiellement 25 mg/l à 400 mg/l et du magnésium en une quantité comprise entre 3,5 mg/l et 250 mg/l, préférentiellement de 3,8 mg/l à 150 mg/l ainsi que de l'acide folique en une quantité comprise entre 40 µg/l et 220 µg/l, préférentiellement de 50 µg/l à 200 µg/l.

4. Liquide potable selon l'une quelconque des revendications précédentes, **caractérisé en ce que** de la choline est contenue en une concentration comprise entre 30 µg/l et 1,8 g/l, préférentiellement de 35 µg/l à 1,5 g/l.

5. Liquide potable selon l'une quelconque des revendications précédentes **caractérisé en ce qu'**en tant que matières minérales organiques du sélénium est contenu en une quantité comprise entre 13 µg/l et 250 µg/l, de préférence entre 15 µg/l et 125 µg/l et/ou de la vitamine B₅ en une quantité comprise entre 2,5 mg/l et 0,7 g/l, de préférence de 3 mg/l à 0,5 g/l et/ou du béta carotène en une quantité de 30 µg/l et à 0,90 mg/l, préférentiellement de 31 µg/l à 0,75 mg/l et/ou de la cystéine en une quantité de 20 mg/l à 1,6 g/l, de préférence de 25 mg/l à 1,5 g/l.

6. Liquide potable selon l'une quelconque des revendications précédentes, **caractérisé en ce que** la vitamine B₁₂ est comprise en une quantité de 13 µg/l à 8 mg/l, préférentiellement de 15 µg/l à 5 mg/l et/ou D en une quantité de 1,3 µg/l à 5 mg/l, de préférence de 1,5 µg/l à 2,5 mg/l et/ou de la biotine en une quantité de 40 µg/l à 0,18 mg/l, de préférence de 50 µg/l à 0,15 mg/l.

7. Liquide potable selon l'une quelconque des revendications précédentes, **caractérisé en ce que** de la vitamine B₃ est présente à une concentration comprise entre 7 mg/l et 120 mg/l, de préférence de 9 mg/l à 100 mg/l et/ou de la lysine et/ou de la proline, à chaque fois à une concentration comprise entre 70 mg/l et 260 mg/l, préférentiellement de 80 mg/l à 250 mg/l.

8. Liquide potable selon l'une quelconque des revendications précédentes, **caractérisé en ce que** de la carnitine est présente à une concentration comprise entre 20 mg/l et 280 mg/l, de préférence de 25 mg/l à 175 mg/l et/ou de l'arginine à une concentration comprise entre 25 mg/l et 85 mg/l, de préférence entre 27 mg/l et 82 mg/l et/ou le coenzyme Q10 à une concentration comprise entre 3 mg/l et 58 mg/l, de préférence entre 5 mg/l et 30 mg/l.

9. Liquide potable selon l'une quelconque des revendications précédentes, **caractérisé en ce qu'**en tant que sels organiques, sont contenus du potassium et/ou du sodium à une concentration à chaque fois de 10 mg/l à 70 mg/l, de préférence de 15 mg/l à 45 mg/l et/ou du phosphore, par exemple en tant que phosphate, à une concentration comprise entre 2 mg/l et 550 mg/l, de préférence entre 3 mg/l et 400 mg/l.

10. Liquide potable selon l'une quelconque des revendications précédentes, **caractérisé en ce qu'**en tant que matières minérales organiques, sont contenus du manganèse à une concentration comprise entre 0,6 mg/l et 3,4 mg/l, de préférence entre 0,75 mg/l et 3 mg/l et/ou du chrome à une concentration comprise entre 6 µg/l et 0,12 mg/l, de préférence entre 7,5 µg/l et 0,1 mg/l et/ou du molybdène à une concentration comprise entre 2,5 µg/l et 70 mg/l, de préférence entre 3 µg/l et 5 mg/l.

11. Liquide potable selon l'une quelconque des revendications précédentes, **caractérisé en ce que** de l'inositol est contenu à une concentration comprise entre 10 mg/l et 80 mg/l, de préférence entre 15 mg/l et 75 mg/l et/ou du pycnogénol à une concentration comprise entre 4 mg/l et 18 mg/l, de préférence entre 5 mg/l et 15 mg/l et/ou en tant que matières minérales organiques, du cuivre à une concentration comprise entre 200 mg/l et 1200 mg/l, de préférence entre 250 mg/l et 1000 mg/l.

12. Liquide potable selon l'une quelconque des revendications précédentes, **caractérisé en ce que** sont présents du fer en une quantité comprise entre 0,5 mg/l et 14 mg/l, de préférence entre 0,65 mg/l et 7 mg/l et/ou de l'iodure en une quantité comprise entre 20 µg/l et 150 µg/l, de préférence entre 25 µg/l et 75 µg/l.

13. Liquide potable selon l'une quelconque des revendications précédentes **caractérisé en ce que** sont contenus de flavonoïdes en une quantité comprise entre 20 mg/l et 40 mg/l, de préférence 25 mg/l et/ou de la vitamine K en une quantité comprise entre 30 µg/l et 70 µg/l, de préférence 50 µg/l.

14. Liquide potable selon l'une quelconque des revendications précédentes, **caractérisé en ce que** sont contenues de l'isoleucine en une quantité de 1 mg/l à 1000 mg/l, de préférence de 10 mg/l à 300 mg/l et/ou de la leucine en une quantité de 1 mg/l à 1500 mg/l, de préférence de 11 mg/l à 300 mg/l et/ou de la méthionine en une quantité de 1 mg/l à 1500 mg/l, de préférence de 14 mg/l à 300 mg/l.

15. Liquide potable selon l'une quelconque des revendications précédentes, **caractérisé en ce que** de la phénylalanine est contenue en une quantité de 1 mg/l à 1500 mg/l, de préférence de 13 mg/l à 300 mg/l et/ou de la thréonine en une quantité de 1 mg/l à 1000 mg/l, de préférence de 10 mg/l à 200 mg/l et/ou du tryptophane en une quantité de 1 mg/l à 1000 mg/l, de préférence de 10 mg/l à 200 mg/l et/ou de la valine en une quantité de 1 mg/l à 1500 mg/l, de préférence de 11 mg/l à 300 mg/l.

16. Liquide potable selon l'une quelconque des revendications précédentes, **caractérisé en ce que** sont contenus de l'asparagine en une quantité de 1 µg/l à 10 g/l, de préférence de 100 mg/l à 1600 mg/l et/ou de la sérine en une quantité de 1 µg/l à 10 g/l, de préférence de 100 mg/l à 1600 mg/l et/ou de l'acide glutamique en une quantité de 1 µg/l à 10 g/l, de préférence de 100 mg/l à 1600 mg/l.

17. Liquide potable selon l'une quelconque des revendications précédentes, **caractérisé en ce que** sont contenus de la glycine en une quantité de 1 µg/l à 10 g/l, de préférence de 100 mg/l à 1600 mg/l et/ou de l'alanine en une quantité de 1 µg/l à 10 g/l, de préférence de 100 mg/l à 1600 mg/l et/ou de la tyrosine en une quantité de 1 µg/l à 10 g/l, de préférence de 100 mg/l à 1600 mg/l et/ou de l'histidine en une quantité de 1 µg/l à 10 g/l, de préférence de 100 mg/l à 1600 mg/l.

18. Liquide potable selon l'une quelconque des revendications précédentes, **caractérisé en ce que** sont contenus en tant que matières minérales, du chlorure en une quantité de 1 mg/l à 100 mg/l, de préférence de 1 mg/l à 20 mg/l et/ou du fluorure en une quantité de 0,5 µg/l à 1,5 µg/l, de préférence de 0,5 µg/l à 1 µg/l.

19. Liquide potable selon l'une quelconque des revendications précédentes, **caractérisé en ce qu'**en tant que matières minérales organiques sont contenus du bore en une quantité de 0,01 µg/l à 300 µg/l et/ou de l'aluminium en une quantité de 0,01 µg/l à 50 µg/l.

20. Liquide potable selon l'une quelconque des revendications précédentes, **caractérisé en ce qu'**en tant que matières minérales organiques, sont contenus de l'arsenic en une quantité de 0,01 µg/l à 10 µg/l, de préférence de 0,01 µg/l à 2 µg/l et/ou du lithium en une quantité de 1 µg/l à 200 mg/l, de préférence de 1 µg/l à 100 mg/l et/ou du vanadium en une quantité de 1 µg/l à 5 mg/l.

21. Procédé pour la production d'un liquide potable selon l'une quelconque des revendications précédentes, dans lequel on élimine d'une eau potable toutes les matières minérales inorganiques et organiques et de préférence les gaz qui y sont dissous, ensuite à cette eau pure sont ajoutées des vitamines et des matières minérales ou respectivement des traces ainsi que, le cas échéant, des protéines et/ou des acides aminés et en ce que le produit ainsi obtenu est soumis enfin à une stérilisation, par exemple rayonnement de lumière UV, **caractérisé en ce que** les matières minérales et/ou les traces sont ajoutées exclusivement sous la forme de sels organiques.

22. Procédé selon la revendication 21, **caractérisé en ce que** la concentration des matières ajoutées à l'eau atteint au maximum la concentration à la saturation des composants individuels selon de la combinaison des matières.

23. Procédé selon la revendication 21 et/ou 22, **caractérisé en ce que** pour l'élimination de CO₂ dissous et pour une répartition homogène des matières a y doser, on injecte de préférence de l'azote ou de l'air sous pression.

24. Procédé selon l'une quelconque des revendications 21 à 23, **caractérisé en ce que** dans le liquide potable, CO₂ est dissous, avantageusement à une concentration qui se trouve au-dessus de la concentration de saturation maximale.

25. Procédé selon la revendication 24, **caractérisé en ce que** CO₂ est ajouté après dissolution des tous les vitamines, acides aminés, protéines, matières minérales et traces qui ont été ajoutés.
